# EUROPEAN PATENT APPLICATION

(11) **EP 2 778 893 A1**
(43) Date of publication of application: **17.09.2014**
(21) Application number: 14156059.9
(22) Date of filing: 21.02.2014
(51) Int. Cl.: G06F 3/12, G06Q 10/06, H04N 1/00

(54) **Device, method and computer program product for workflow processing**

(30) Priority: 15.03.2013 JP 2013054442
(71) Applicant: Ricoh Company, Ltd., Tokyo 143-8555 (JP)
(72) Inventor: Kamimoto, Hiroshi, Tokyo, 143-8555 (JP)
(74) Representative: Schwabe - Sandmair - Marx

(57) **Abstract**

An information processing device (100; 200; 2400) includes: a reception unit (102; 205; 2402) that receives a workflow definition specifying processing; a rule acquisition unit (103; 204; 2408) that acquires, regarding the processing, a workflow rule capable of setting therein a parameter indicating which processing is to be executed; a setting unit (104, 105; 205, 206; 2405, 2407) that sets the parameter of the workflow rule based on the workflow definition; and an execution control unit (102; 205; 2402) that controls execution of the processing in accordance with the workflow rule in which the parameter is set.

## Description

### CROSS-REFERENCE TO RELATED APPLICATIONS

The present application claims priority to and incorporates by reference the entire contents of Japanese Patent Application No. 2013-054442 filed in Japan on March 15, 2013.

### BACKGROUND OF THE INVENTION

### 1. Field of the Invention

The present invention relates to an information processing device, a network system, a processing execution method, and a processing execution computer program product.

### 2. Description of the Related Art

Conventionally, there is known a distribution system that distributes data scanned by an image forming apparatus, such as a scanner and a multifunction printer (MFP), to a distribution server. In such a distribution system, data is distributed to distribution destinations in accordance with a workflow preliminarily set by an administrator of the distribution system. That is, when management rules related to data distribution are different depending on distribution destinations, a workflow corresponding to each management rule is created so as to distribute the data appropriately. A conventional example is described in Japanese Patent Application Laid-open No. 2007-122281.

However, the conventional technique described above has a problem that a burden on an administrator may be increased. In a distribution server in the conventional technique controlling execution of workflows, when a workflow defined in a distribution server is related to a system in another device, there may occur a case where in accordance with the change of a management rule of such another device, the workflow definition of the distribution server also needs to be changed. In the distribution of data to another device, for example, when the distribution server has a function of specifying a certain folder of another device to distribute the data depending on an attribute of the data, and if the folder structure of the another device is changed, the data cannot be distributed appropriately unless the workflow definition of the distribution server is also changed. Here, the rule change both in the distribution server as well as in another device is a burden on the administrator. When the administrator of a distribution server is different from the administrator of another device, the burden further increases because they need to contact each other to reflect a change every time the change is made.

In view of the above aspects, there is a need to provide an information processing device, a network system, a processing execution method, and a processing execution computer program product that are capable of decreasing a burden on an administrator.

### SUMMARY OF THE INVENTION

It is an object of the present invention to at least partially solve the problems in the conventional technology.

An information processing device includes: a reception unit that receives a workflow definition specifying processing; a rule acquisition unit that acquires, regarding the processing, a workflow rule capable of setting therein a parameter indicating which processing is to be executed; a setting unit that sets the parameter of the workflow rule based on the workflow definition; and an execution control unit that controls execution of the processing in accordance with the workflow rule in which the parameter is set.

A processing execution method includes: receiving a workflow definition specifying processing; acquiring, regarding the processing, a workflow rule capable of setting therein a parameter indicating which processing is to be executed; setting the parameter of the workflow rule based on the workflow definition; and controlling execution of the processing in accordance with the workflow rule in which the parameter is set.

A computer program product includes a non-transitory computer-usable medium having computer-readable program codes embodied in the medium. The program codes when executed cause a computer to execute: receiving a workflow definition specifying processing; acquiring, regarding the processing, a workflow rule capable of setting therein a parameter indicating which processing is to be executed; setting the parameter of the workflow rule based on the workflow definition; and controlling execution of the processing in accordance with the workflow rule in which the parameter is set.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram illustrating a configuration example of a distribution system according to a first embodiment;
FIG. 2 is a functional block diagram illustrating a configuration example of an information processing device according to the first embodiment;
FIG. 3 is a sequence diagram illustrating an example of a data distribution processing flow according to the first embodiment;
FIG. 4 is a flowchart illustrating an example of a workflow update processing flow according to the first embodiment;
FIG. 5 is a diagram for explaining an example of a workflow before rule acquisition and update and an example of a workflow after rule acquisition and update;
FIG. 6 is a functional block diagram illustrating a configuration example of an information processing device according to a second embodiment;
FIG. 7 is a sequence diagram illustrating an example of a data distribution processing flow according to the second embodiment;
FIG. 8 is a flowchart illustrating an example of a plug-in execution control processing flow according to the second embodiment;
FIG. 9 is a diagram illustrating a configuration example of a distribution system according to a third embodiment;
FIG. 10 is a diagram for explaining an example of a service providing system according to the third embodiment;
FIG. 11 is a block diagram illustrating a functional configuration example of a scanning service application and an information processing device according to the third embodiment;
FIG. 12 is a diagram illustrating an example of information stored in an enterprise management information storage unit;
FIG. 13 is a diagram illustrating an example of information stored in a user management information storage unit;
FIG. 14 is a diagram illustrating an example of information stored in a device management information storage unit; and
FIG. 15 is a sequence diagram illustrating an example of entire processing according to the third embodiment.

### DETAILED DESCRIPTION OF THE PREFERRED EMBODIMENTS

The following will describe embodiments of an information processing device, a network system, a processing execution method, and a processing execution program according to the invention with reference to the enclosed drawings. The following embodiments do not limit the invention.

### First Embodiment

### System Configuration of the First Embodiment

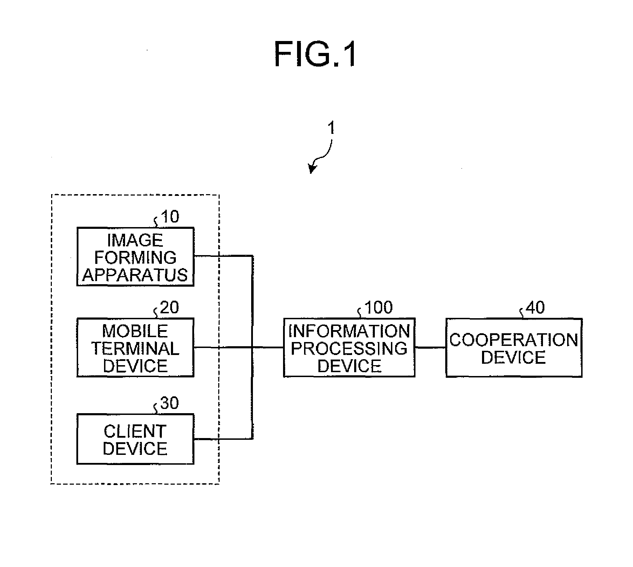

The configuration of the distribution system of a first embodiment will be described with reference to FIG. 1. FIG. 1 is a diagram illustrating a configuration example of the distribution system of the first embodiment.

As illustrated in FIG. 1, the distribution system 1 includes an image forming apparatus 10, a mobile terminal device 20, a client device 30, a cooperation device 40, and an information processing device 100. The image forming apparatus 10 is an MFP having two or more functions including at least a scanner function among a copy function, a printer function, the scanner function, and a facsimile function, or is a laser printer (LP). The image forming apparatus 10 requests the information processing device 100 to execute a workflow for distributing scanned image data.

The mobile terminal device 20 is a cellular phone, a smartphone, a tablet terminal, or the like that a user owns. The mobile terminal device 20 requests the information processing device 100 to execute a workflow for distributing image data captured using a camera function. The client device 30 is an information processing device such as a personal computer (PC). The client device 30 requests the information processing device 100 to execute a workflow for distributing application data and web data. That is, a user specifies data to be distributed and a workflow with the use of devices surrounded by a broken line in FIG. 1.

The cooperation device 40 is an information processing device such as a PC, a server, and a thin client. The cooperation device 40 contains workflow rules for data distribution and transmits the workflow rules in response to requests from the information processing device 100. The cooperation device 40 may be used as a document management server in which distributed data is allocated.

The information processing device 100 is an information processing device such as a PC, a server, and a thin client. The information processing device 100 receives data to be distributed and requests for the execution of workflows from, for example, the image forming apparatus 10, the mobile terminal device 20, and the client device 30. The information processing device 100 then acquires a workflow rule from the cooperation device 40, reflects contents of workflows received from the devices in the acquired workflow rule, and executes processing in accordance with the reflected workflow. In this manner, the information processing device 100 achieves execution of the workflow specified by a user without creating a workflow rule for each of different workflows. The detail of the processing performed by the information processing device 100 will be described later.

### Configuration of Information Processing Device of the First Embodiment

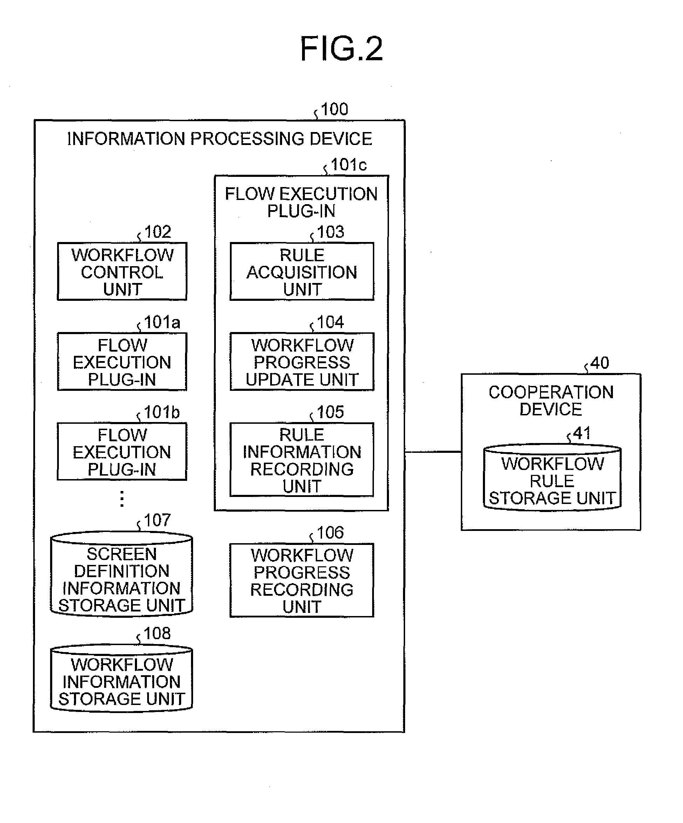

Next, the configuration of the information processing device of the first embodiment will be described with reference to FIG. 2. FIG. 2 is a functional block diagram illustrating a configuration example of the information processing device of the first embodiment. FIG. 2 also illustrates a configuration of the cooperation device 40.

As illustrated in FIG. 2, the cooperation device 40 includes a workflow rule storage unit 41. The workflow rule storage unit 41 stores therein workflow rules. Such workflow rules are in a general definition file that is capable of setting therein information related to distributed image data and a parameter indicating which processing is to be executed on the distributed image data, and is edited, for example, by an administrator of the cooperation device 40 if necessary. The information set in a workflow rule is various kinds of setting information such as a resolution, a file conversion, and creation of a subfolder at the time of distribution. In the embodiment, workflows for distributing image data are determined by setting parameters of workflow rules that can be used generally.

The information processing device 100 includes a flow execution plug-in 101a, a flow execution plug-in 101b, a workflow control unit 102, a rule acquisition unit 103, a workflow progress update unit 104, and a rule information recording unit 105. The rule acquisition unit 103, the workflow progress update unit 104, and the rule information recording unit 105 serve as a flow execution plug-in 101c. In addition, the information processing device 100 includes a workflow progress recording unit 106, a screen definition information storage unit 107, and a workflow information storage unit 108. The flow execution plug-ins are not only the flow execution plug-in 101 a and the flow execution plug-in 101b, and there exist a plurality of plug-ins for executing workflows.

The workflow control unit 102 entirely controls the execution of workflows. To be more specific, the workflow control unit 102 controls the processing of workflows that are set by a user and for which execution is requested by the user. At this time, the workflow control unit 102 analyzes flow definition information representing definition information set in a workflow. The workflow control unit 102 then requests each of flow execution plug-ins to execute the processing in accordance with the defined procedure of the workflow.

The rule acquisition unit 103 acquires a workflow rule. To be more specific, receiving an execution request from the workflow control unit 102, the rule acquisition unit 103 connects with the cooperation device 40 to acquire a workflow rule. The rule acquisition unit 103 then outputs the acquired workflow rule to the workflow progress update unit 104.

The workflow progress update unit 104 analyzes each parameter of the acquired workflow rule based on rule information stored in the rule information recording unit 105, and updates the workflow definition information. The workflow progress update unit 104 also updates the state of progress regarding the workflow definition information.

The rule information recording unit 105 stores, regarding the workflow rule acquired by the rule acquisition unit 103, association between a parameter indicating which processing is to be executed and workflow definition information corresponding to the parameter. This is for making it unnecessary for the cooperation device 40 to rewrite, when some change is made in a data structure of definition information defining a workflow in the information processing device 100 (when the description for of definition information is changed), the workflow rule in accordance with the changed contents, for example. That is, the rule information recording unit 105 of the information processing device 100 stores definition information of workflows depending on processing so that the cooperation device 40 can set a parameter of processing to be executed with a general definition file without considering design changes, and so on, in the information processing device 100.

The workflow progress recording unit 106 records the progress of workflows. That is, the workflow progress recording unit 106 records, under control of the workflow control unit 102, the progress of workflows every time the flow execution plug-ins are executed.

The screen definition information storage unit 107 stores therein information of screens displayed on a device requesting the execution of a workflow. To be more specific, the screen definition information storage unit 107 stores therein definition information of screens displayed on a display unit of the device requesting the execution of a workflow such as the image forming apparatus 10, the mobile terminal device 20, and the client device 30. The definition information of screens stored in the screen definition information storage unit 107 is transmitted to the device in response to access from it. In this manner, in each device, a request for the execution of a workflow can be transmitted to the information processing device after a user selects the workflow that he or she intends to execute from a displayed screen and performs various settings regarding the selected workflow (a scan resolution and/or a conversion format of file conversion, for example). Moreover, each device outputs a screen indicating that the processing is completed to the display unit for example.

The workflow information storage unit 108 stores therein workflow information related to the processing of one or more workflows preliminarily defined by an administrator or the like. A user accessing from each device selects a workflow that he or she intends to execute among the workflows defined in the workflow information storage unit 108. That is, the workflow information storage unit 108 stores therein definition information of workflows that are intended to be selected by the user, and the screen definition information storage unit 107 stores therein screens prompting the user to select a workflow defined in the workflow information storage unit 108 and screens prompting the user to perform various settings in accordance with the workflow.

### Data Distribution Processing Sequence of the First Embodiment

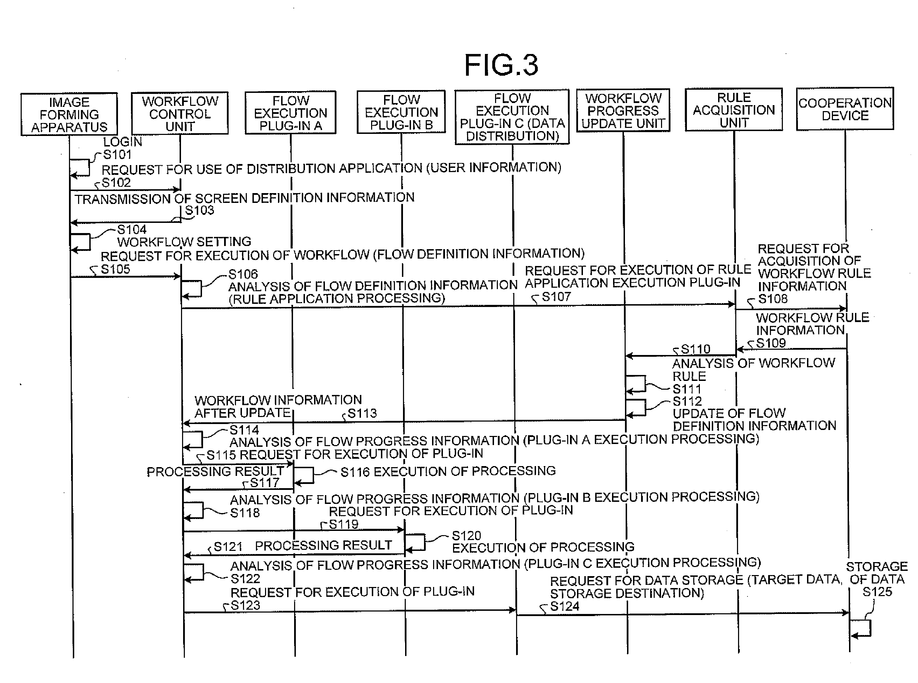

Next, the data distribution processing flow of the first embodiment will be described with reference to FIG. 3. FIG. 3 is a sequence diagram illustrating an example of a data distribution processing flow of the first embodiment. FIG. 3 is an example of a case in which the image forming apparatus 10 outputs a workflow execution request.

As illustrated in FIG. 3, a user performs login operation on the image forming apparatus 10 (Step S101). Here, it is supposed that the login operation is performed to use a distribution application that distributes data. In the login operation, the user is required to input user information such as a user name and a password. The image forming apparatus 10 transmits a request for the use of the distribution application to the workflow control unit 102 (Step S102). Here, the image forming apparatus 10 also transmits the user information together with the request for the use of the distribution application.

When the workflow control unit 102 has received the request for the use of the distribution application, it acquires screen definition information for setting a workflow from the screen definition information storage unit 107 and makes a response to the image forming apparatus 10 (Step S103). The image forming apparatus 10 displays a screen for setting a workflow on the display unit based on the received screen definition information and receives workflow settings input by the user (Step S 104). The image forming apparatus 10 requests the execution of the workflow by the set workflow (Step S105).

When the workflow control unit 102 has received the request for the execution of the workflow from the image forming apparatus 10, it analyzes flow definition information of the workflow for which execution has been requested (Step S106) and requests the flow execution plug-ins performing respective processing to execute the processing in accordance with the defined procedure of the workflow. In FIG. 3, the workflow control unit 102 first requests the rule application flow execution plug-in 101c to execute the processing because the rule application processing has been defined (Step S107).

The rule acquisition unit 103 of the rule application flow execution plug-in 101 c having received the request for the execution of the processing connects with the cooperation device 40 and requests the acquisition of a workflow rule (Step S 108). The cooperation device 40 transmits, in response to the acquisition request from the rule acquisition unit 103, a workflow rule to the rule acquisition unit 103 (Step S109). The rule acquisition unit 103 outputs the received workflow rule to the workflow progress update unit 104 (Step S110).

The workflow progress update unit 104 analyzes the workflow rule output by the rule acquisition unit 103 based on the rule information stored in the rule information recording unit 105 (Step S111) and updates the flow definition information (Step S112). In the update of the flow definition information, the definition information of a flow in accordance with the processing specified by the parameter described in the acquired workflow rule is added to the flow definition information before update. The rule application flow execution plug-in 101c (workflow progress update unit 104) outputs the workflow information after update (updated workflow definition information) to the workflow control unit 102 (Step S113).

When the workflow control unit 102 has received the workflow information after update from the workflow progress update unit 104, it analyzes the procedure of the workflow described in the workflow information after update and the flow progress information and determines the flow execution plug-in 101 to be caused to execute processing next (flow execution plug-in A, here) (Step S 114). The workflow control unit 102 requests the flow execution plug-in A to execute the processing (Step S 115). Thus, the flow execution plug-in A executes the processing (Step S116) and outputs the processing result (including update of the flow progress information) to the workflow control unit 102 (Step S 117).

The workflow control unit 102 analyzes the flow progress information and determines the flow execution plug-in 101 to be caused to execute the processing next (flow execution plug-in B, here) (Step S118). The workflow control unit 102 requests the flow execution plug-in B to execute the processing (Step S119). Thus, the flow execution plug-in B performs the processing (Step S120) and outputs the processing result (including update of the flow progress information) to the workflow control unit 102 (Step S121).

The workflow control unit 102 analyzes the flow progress information and recognizes that the flow execution plug-in 101 (flow execution plug-in C. here) is to be caused to execute the processing next (Step S122). The workflow control unit 102 requests the flow execution plug-in C to execute the processing (Step S123). Thus, the flow execution plug-in C requests the cooperation device 40 that is a distribution destination of image data to store the image data (Step S124). Here, the information transmitted to the cooperation device 40 is the image data to be stored and a path of the storage destination. The cooperation device 40 stores such image data in the path of the storage destination based on the storage request (Step S125). The workflow control unit 102 finishes the processing once the processing of the workflow for which execution has been requested is completed. The workflow control unit 102 may notifies the image forming apparatus 10 of the completion of the workflow.

### Workflow Update Processing Flow of the First Embodiment

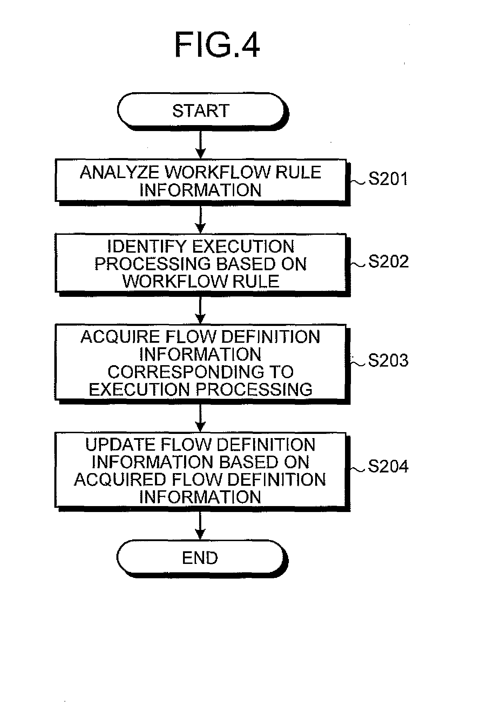

The following will describe a flow of workflow update processing executed by the workflow progress update unit 104 of the rule application flow execution plug-in 101c of the first embodiment with reference to FIG. 4. FIG. 4 is a flowchart illustrating an example of the workflow update processing flow of the first embodiment.

As illustrated in FIG. 4, the workflow progress update unit 104 analyzes the workflow rule acquired from the cooperation device 40 and searches for a parameter matching the parameter stored in the rule information recording unit 105 (Step S201). The workflow progress update unit 104 identifies the matching parameter and thus identifies processing that is intended to be executed in accordance with the workflow rule (Step S202). Next, the workflow progress update unit 104 acquires flow definition information corresponding to the processing that is intended to be executed (Step S203) and updates definition information of the workflow for which execution has been requested based on the acquired flow definition information (Step S204).

The parameter in the workflow rule and the parameter in the rule information recording unit 105 are preliminarily set so that they have the same description. For example, when the optical character reader (OCR) processing is to be performed, a parameter "OCR" is described, for example. For the detail setting of the OCR processing such as whether the OCR setting is performed with text or without text, a parameter "OCRwithTEXT-True" or "OCRwithTEXT=False" is described, for example. That is, the parameter "OCR" is a parameter for specifying a flow execution plug-in for which execution is intended, and the parameter "OCRwithTEXT=True" or "OCRwithTEXT=False" is setting information of the processing of the flow execution plug-in for which execution is intended.

The workflow rule does not necessarily include a parameter indicating a flow execution plug-in. For example, for the specification of only a distribution destination, the input of "Distribution = (path of distribution destination)" allows the distribution to the path specified by the cooperation device 40. In the workflow rule, parameters are described in the order of processing to be executed, which makes it possible to form definition information of the workflow after update obtained by further adding a workflow to the workflow for which execution has been requested. Therefore, the rule information recording unit 105 stores therein, in an associated manner, a parameter indicating each flow execution plug-in, a parameter indicating setting information of each flow execution plug-in, and actual flow definition information to be described in the workflow definition information.

The workflow progress update unit 104 analyzes the parameters and performs, when the flow execution plug-in is indicated, update by adding processing of the flow execution plug-in to the workflow based on the corresponding flow definition information. When the setting information is indicated, the workflow progress update unit 104 identifies flow definition information regarding the flow execution plug-in for which update according to the setting information is to be performed, based on the workflow definition information, and performs processing of updating the setting information of the identified flow definition information.

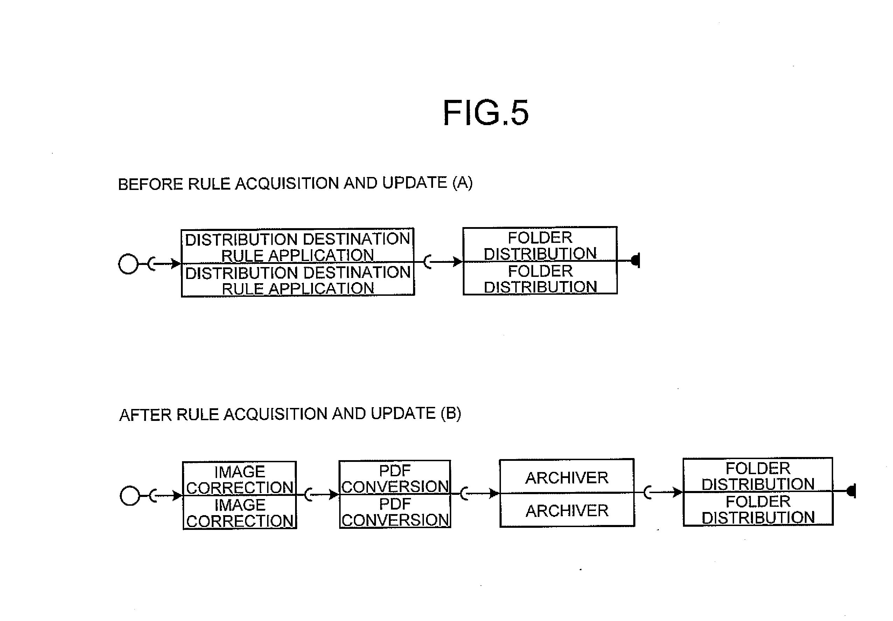

FIG. 5 is a diagram for explaining an example of workflows before rule acquisition and update and after rule acquisition and update. The workflow before rule acquisition and update is processing of a workflow defined preliminarily by an administrator or the like, that is, it is the information stored in the workflow information storage unit 108. For example, as illustrated in FIG. 5A, the workflow before rule acquisition and update is a workflow including "distribution destination rule application" and "folder distribution". Here, the "distribution destination rule application" indicates a rule application plug-in. Thus, the workflow after rule acquisition and update is processing of a workflow processed by the rule application plug-in. For example, as illustrated in FIG. 5B, the workflow after rule acquisition and update is a workflow including "image correction", "PDF conversion", "archiver", and "folder distribution".

### Effect of the First Embodiment

In the information processing device 100, with only the definition of the rule application flow execution plug-in 101c as one of processing of a workflow, the rule application flow execution plug-in 101c acquires a workflow rule from the cooperation device 40 and updates definition information of the workflow based on the acquired workflow rule. Therefore, even when the processing to be applied is changed in the cooperation device 40, there is no need to make a change in the information processing device 100, which can decrease a burden on an administrator.

### Second Embodiment

### Configuration of Information Processing Device of the Second Embodiment

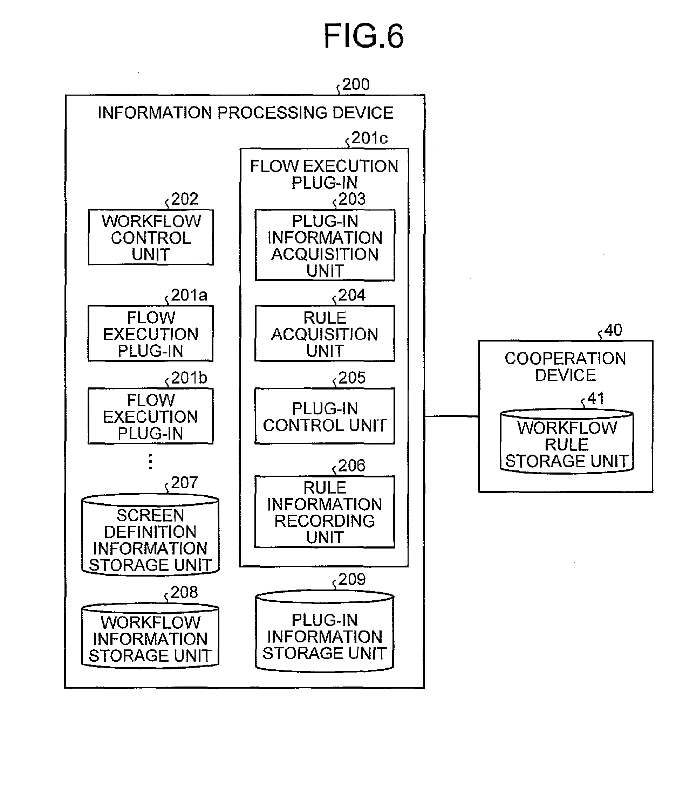

The configuration of an information processing device of a second embodiment will be described with reference to FIG. 6. FIG. 6 is a functional block diagram illustrating a configuration example of the information processing device of the second embodiment. FIG. 6 also illustrates the configuration of the cooperation device 40, similarly to the first embodiment.

As illustrated in FIG. 6, the cooperation device 40 includes the workflow rule storage unit 41. The configuration and the processing of the cooperation device 40 are the same as the cooperation device 40 of the first embodiment. Thus, the detailed description thereof is omitted.

An information processing device 200 includes a flow execution plug-in 20 1 a, a flow execution plug-in 201b, a workflow control unit 202, a plug-in information acquisition unit 203, a rule acquisition unit 204, a plug-in control unit 205, and a rule information recording unit 206. The plug-in information acquisition unit 203, the rule acquisition unit 204, the plug-in control unit 205, and the rule information recording unit 206 serve as a flow execution plug-in 201c. In addition, the information processing device 200 includes a screen definition information storage unit 207, a workflow information storage unit 208, and a plug-in information storage unit 209. The flow execution plug-ins are not only the flow execution plug-in 201a and the flow execution plug-in 201b, and there exist a plurality of plug-ins for executing workflows.

The workflow control unit 202 entirely controls the execution of workflows. To be more specific, the workflow control unit 202 controls the processing of workflows that are set by a user and for which execution is requested by the user. Here, the workflow control unit 202 analyzes flow definition information indicating definition information set in a workflow. The workflow control unit 202 then requests each of flow execution plug-ins to execute the processing in accordance with the defined procedure of the workflow. In the second embodiment, the workflow control unit 202 requests the flow execution plug-in 101c to execute the processing, and the flow execution plug-in 101 c requests each of the flow execution plug-ins to execute the processing, thereby achieving the execution of each flow execution plug-in.

The plug-in information acquisition unit 203 acquires plug-in information. To be more specific, when the plug-in information acquisition unit 203 has received a request for the execution of a plug-in from the workflow control unit 202, it requests the rule acquisition unit 204 to acquire a workflow rule. When the plug-in information acquisition unit 203 has acquired the workflow rule through the response from the rule acquisition unit 204, it acquires plug-in information from the plug-in information storage unit 209. Thereafter, the plug-in information acquisition unit 203 outputs the acquired plug-in information and so on, to the plug-in control unit 205. The plug-in information storage unit 209 stores therein a list of plug-ins existing in the information processing device 200. The plug-in information storage unit 209 stores therein association between each plug-in and a name thereof and so on, used in the description in the workflow rule. That is, in the embodiment, processing requests are sequentially output to the associated plug-ins while using the plug-in information.

The rule acquisition unit 204 acquires a workflow rule. To be more specific, when the rule acquisition unit 204 has received a request for the acquisition of a workflow rule from the plug-in information acquisition unit 203, it connects with the cooperation device 40 to acquire a workflow rule. The rule acquisition unit 204 then outputs the acquired workflow rule to the plug-in information acquisition unit 203.

The plug-in control unit 205 analyzes the workflow rule and requests each flow execution plug-in to execute the processing. To be more specific, when the plug-in control unit 205 has received plug-in information from the plug-in information acquisition unit 203, it sequentially requests, based on the plug-in information, the associated flow execution plug-ins to execute the processing. In this manner, when the processing of all of the flow execution plug-ins is completed, the plug-in control unit 205 outputs notification indicating that the processing is completed to the workflow control unit 202.

The rule information recording unit 206 stores, regarding the workflow rule acquired by the rule acquisition unit 204, association between a parameter indicating which processing is to be executed and workflow definition information corresponding to the parameter. The processing of the rule information recording unit 206 is similar to the processing of the rule information recording unit 105.

The screen definition information storage unit 207 stores therein information of screens displayed on a device requesting the execution of a workflow. To be more specific, the screen definition information storage unit 207 stores therein definition information of screens displayed on a display unit of the device requesting the execution of a workflow such as the image forming apparatus 10, the mobile terminal device 20, and the client device 30. The definition information of screens stored in the screen definition information storage unit 207 is transmitted to the device in response to access from the device. In this manner, in each device, a request for the execution of a workflow can be transmitted to the information processing device after a user selects the workflow that he or she intends to execute from a displayed screen and performs various settings regarding the selected workflow (a scan resolution and a conversion format of file conversion, for example). Moreover, each device outputs a screen indicating that the processing is completed to the display unit for example.

The workflow information storage unit 208 stores therein workflow information related to the processing of one or more workflows preliminarily defined by an administrator or the like. A user accessing from each device selects a workflow that he or she intends to execute among the workflows defined in the workflow information storage unit 208. That is, the workflow information storage unit 208 stores therein definition information of workflows that are intended to be selected by the user, and the screen definition information storage unit 207 stores therein screens prompting the user to select a workflow defined in the workflow information storage unit 208 and screens prompting the user to perform various settings in accordance with the workflow.

### Data Distribution Processing Sequence of the Second Embodiment

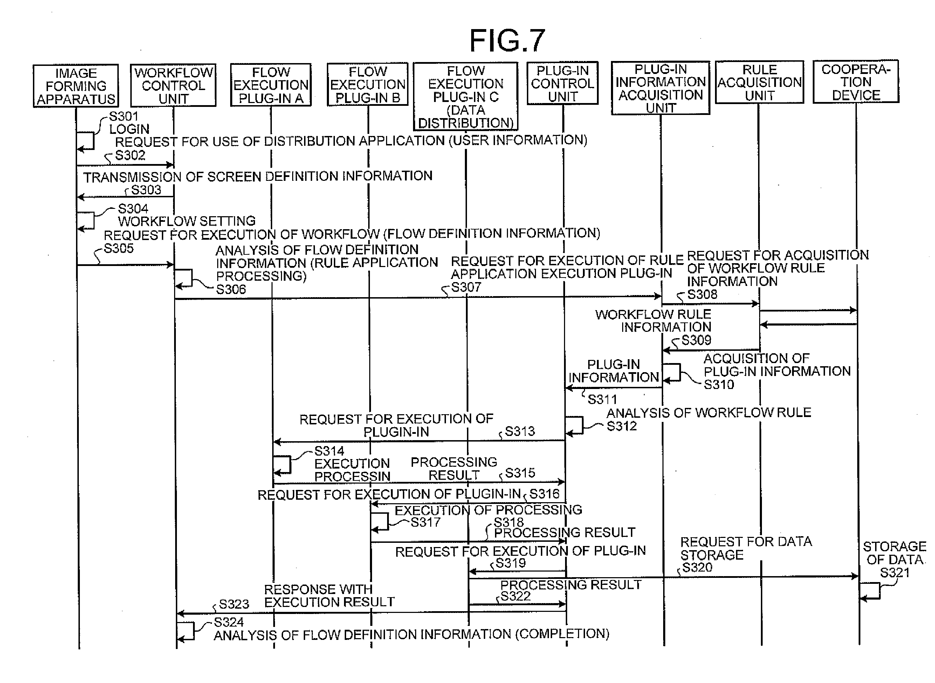

Next, the data distribution processing flow of the second embodiment will be described with reference to FIG. 7. FIG. 7 is a sequence diagram illustrating an example of a data distribution processing flow of the second embodiment. FIG. 7 is an example of a case in which the image forming apparatus 10 outputs a workflow execution request.

As illustrated in FIG. 7, a user performs login operation on the image forming apparatus 10 (Step S301). Here, it is supposed that the login operation is performed to use a distribution application that distributes data. In the login operation, the user is required to input user information such as a user name and a password. The image forming apparatus 10 transmits a request for the use of the distribution application to the workflow control unit 202 (Step S302). Here, the image forming apparatus 10 also transmits the user information together with the request for the use of the distribution application.

When the workflow control unit 202 has received the request for the use of the distribution application, it acquires screen definition information for setting a workflow from the screen definition information storage unit 207 and makes a response to the image forming apparatus 10 (Step S303). The image forming apparatus 10 displays a screen for setting a workflow on the display unit based on the received screen definition information and receives workflow settings input by the user (Step S304). The image forming apparatus 10 requests the execution of the workflow along the set workflow (Step S305). Here, the image forming apparatus 10 also transmits the flow definition information together with the workflow execution request.

When the workflow control unit 202 has received the request for the execution of the workflow from the image forming apparatus 10, it analyzes flow definition information of the workflow for which execution has been requested (Step S306) and requests the flow execution plug-ins performing respective processing to execute the processing in accordance with the defined procedure of the workflow. In FIG. 7, the workflow control unit 202 requests the rule application flow execution plug-in 201 c to execute the processing because the rule application processing has been defined (Step S307).

When the plug-in information acquisition unit 203 of the rule application flow execution plug-in 201c having received a request for the execution of the processing has received a request for the execution of the plug-in from the workflow control unit 202, it requests the rule acquisition unit 204 to acquire a workflow rule (Step S308). When the rule acquisition unit 204 has received the request for the acquisition of a workflow rule, it connects with the cooperation device 40 to request the acquisition of the workflow rule. The rule acquisition unit 204 acquires the workflow rule from the cooperation device 40 and outputs the acquired workflow rule to the plug-in information acquisition unit 203 (Step S309).

When the plug-in information acquisition unit 203 has received the workflow rule from the rule acquisition unit 204, it acquires plug-in information from the plug-in information storage unit 209 and outputs the acquired plug-in information to the plug-in control unit 205 (Step S310). When the plug-in control unit 205 has received the plug-in information and so on, from the plug-in information acquisition unit 203, it analyzes the workflow rule based on the plug-in information (Step S312), determines the flow execution plug-in 101 to be caused to execute the processing next that is associated with the plug-in information (flow execution plug-in A, here), and requests the execution of the plug-in (Step S313). In this manner, the flow execution plug-in A executes the processing (Step S314) and outputs the processing result to the plug-in control unit 205 (Step S315).

Similarly, the plug-in control unit 205 requests the flow execution plug-in B to execute the processing of the plug-in (Step S316). The flow execution plug-in B executes the processing (Step S317) and outputs the processing result to the plug-in control unit 205 (Step S318). Moreover, the plug-in control unit 205 requests the flow execution plug-in C to execute the processing of the plug-in (Step S319).

Thus, the flow execution plug-in C requests the cooperation device 40 that is a distribution destination of image data to store the image data (Step S320). Here, the information transmitted to the cooperation device 40 is the image data to be stored and a path of the storage destination. The cooperation device 40 stores such image data in the path of the storage destination based on the storage request (Step S321). After the data storage request, the flow execution plug-in C outputs the processing result to the plug-in control unit 205 (Step S322). The plug-in control unit 205 outputs notification indicating that the processing of all of the flow execution plug-ins is completed to the workflow control unit 202 as a response with the execution result (Step S323). The workflow control unit 202 finishes the processing as all processing in the flow definition information is completed (Step S324).

### Plug-in Execution Control Processing Flow of the Second Embodiment

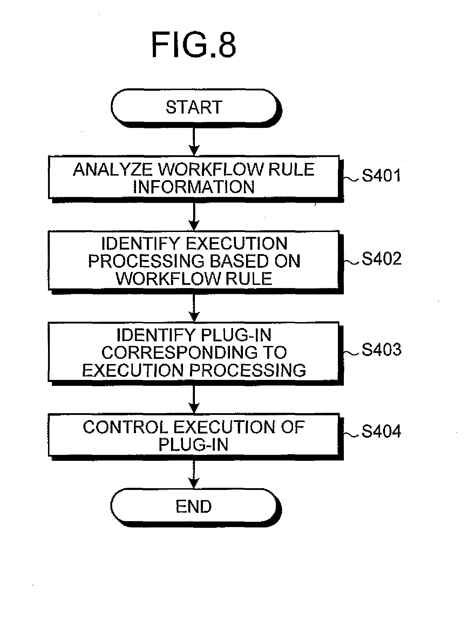

The following will describe a flow of the plug-in execution control processing executed by the plug-in control unit 205 of the rule application flow execution plug-in 201c of the second embodiment with reference to FIG. 8. FIG. 8 is a flowchart illustrating an example of the plug-in execution control processing flow of the second embodiment.

As illustrated in FIG. 8, the plug-in control unit 205 receives plug-in information from the plug-in information acquisition unit 203 and analyzes a workflow rule (Step S401). The plug-in control unit 205 identifies the corresponding execution processing based on the plug-in information (Step S402). Subsequently, the plug-in control unit 205 identifies a flow execution plug-in corresponding to the execution processing (Step S403) and sequentially performs execution control of the plug-in (Step S404).

### Effect of the Second Embodiment

The information processing device 200 requests, based on the information associating a plug-in performing processing with its name used in the description in a workflow rule and so on,, the corresponding plug-in to execute the processing. As a result, there is no need to generate a workflow rule corresponding to each workflow, which can decrease a burden on an administrator.

### Third Embodiment

While the embodiments of the information processing device of the invention have been described, various kinds of different embodiments can be implemented other than the embodiments described above. The following will describe embodiments different from those mentioned above in (1) configuration and (2) program.

### (1) Configuration

The processing procedure, the control procedure, the specific names, and the information including the various kinds of data and the parameters, which have been described in the above-mentioned description and drawings, can be modified arbitrarily unless otherwise specified. Moreover, the illustrated components of each device are based on the functional concept, and are not necessarily configured physically as illustrated in the drawings. That is, the specific form in relation to distribution or integration of the devices is not limited to the form illustrated in the drawings, and the entire of the device or one part thereof can be distributed or integrated functionally or physically in an arbitrary unit, depending on various loads, a use state, and/or the like.

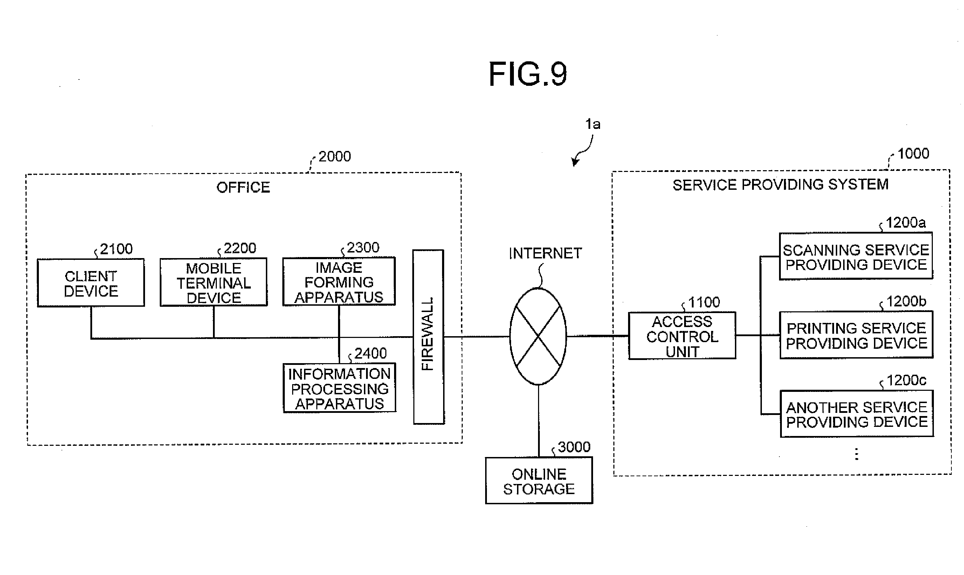

FIG. 9 is a diagram illustrating a configuration example of a distribution system according to a third embodiment. As illustrated in FIG. 9, in a distribution system 1a, a service providing system 1000 and an office 2000, and an online storage 3000 are connected to a network such as the Internet. Among them, the service providing system 1000 includes an access control device 1100, a scanning service providing device 1200a, a printing service providing device 1200b, and another service providing device 1200c. The service providing system 1000 adopts cloud computing, and provides various kinds of service.

The access control device 1100 is an information processing device such as a PC and a server device that controls provision of various kinds of service. The scanning service providing device 1200a is an information processing device such as a PC and a server device that provides service related to scanning of documents. The printing service providing device 1200b is an information processing device such as a PC and a server device that provides service related to printing of print data. Another service providing device 1200c is an information processing device such as a PC and a server device that provides service such as portal service that is different from the service provided by the scanning service providing device 1200a or the printing service providing device 1200b. Here, the portal service indicates service of providing a portal site for providing service depending on enterprises or users. The number of each device arranged in the service providing system 1000 is one or more.

The office 2000 includes a client device 2100, a mobile terminal device 2200, an image forming apparatus 2300, and an information processing device 2400. The client device 2100 is an information processing device such as a PC used by a user. The mobile terminal device 2200 is a terminal device such as a cellular phone, a smartphone, and a tablet terminal used by a user. The image forming apparatus 2300 is an image forming apparatus such as an MFP, a copying machine, a scanner, a printer, and an LP. The information processing device 2400 is an information processing device such as a PC and a server device that distribute image data. The connection to a network from the devices in the office 2000 is performed through a firewall. The number of each device arranged in the office 2000 is one or more. The office 2000 may be a shop or a private residence, for example. Some of the devices included in the office 2000 may be arranged on a network outside the office.

The online storage 3000 is a storage device that stores therein various kinds of data. The online storage 3000 stores therein various kinds of data through a network such as the Internet. The online storage 3000 maybe used as a storage device of a distribution destination to which image data is distributed. The system configuration of the distribution system 1a illustrated in FIG. 9 is one example and the devices and the functions can be integrated or distributed, for example.

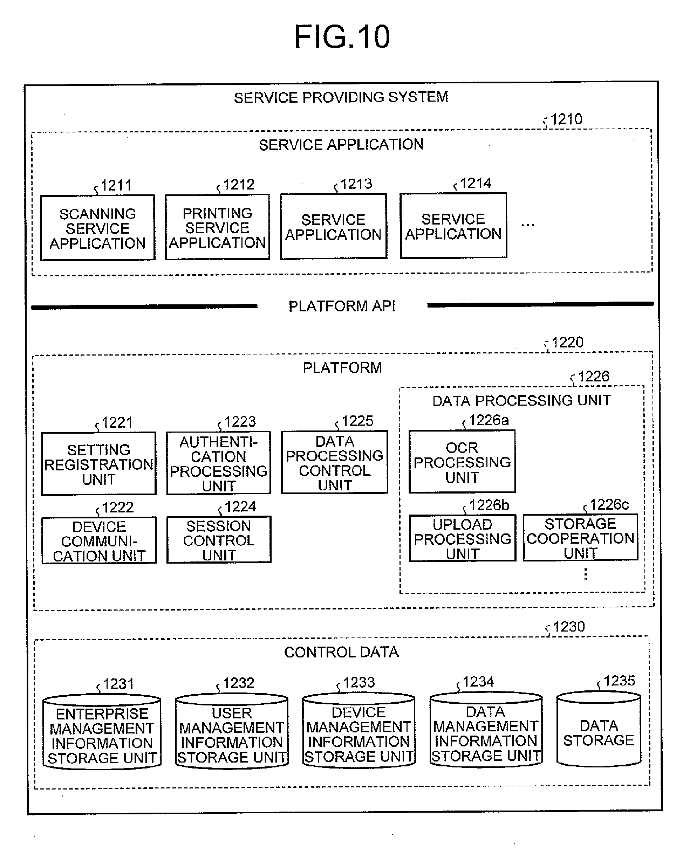

FIG. 10 is a diagram illustrating an example of the service providing system 1000 of the third embodiment. In the following, an application program provided by the service providing system 1000 may be merely referred to as an "application".

The service providing system 1000 illustrated in FIG. 10 is used for achieving provision of various kinds of service such as scanning service related to distribution service. A service application 1210 includes a scanning service application 1211, a printing service application 1212, a service application 1213, a service application 1214, and so on. The various functions of these service applications can be used in a range open by a platform application programming interface (API).

A platform 1220 includes functions common to a plurality of service applications and basic functions used by the service applications, for example. A setting registration unit 1221 registers settings regarding the platform 1220 and various settings related to the common functions and the basic functions. A device communication unit 1222 controls communication with devices. An authentication processing unit 1223 performs authentication processing when a user uses service. When the service providing system 1000 cooperates with a device, a session control unit 1224 controls their communication sessions.
A data processing control unit 1225 controls data processing by each data processing unit 1226 based on various requests. The data processing unit 1226 includes an OCR processing unit 1226a, an upload processing unit 1226b, and a storage cooperation unit 1226c. The OCR processing unit 1226a reads out characters optically and outputs character data, or recognizes characters based on image data read out by a scanner or the like, and converts them to a document. The upload processing unit 1226b uploads data received from devices into a storage as a distribution destination. The storage as a distribution destination is the online storage 3000, for example. The storage cooperation unit 1226c transmits and receives data controlled by the online storage 3000 on the network.

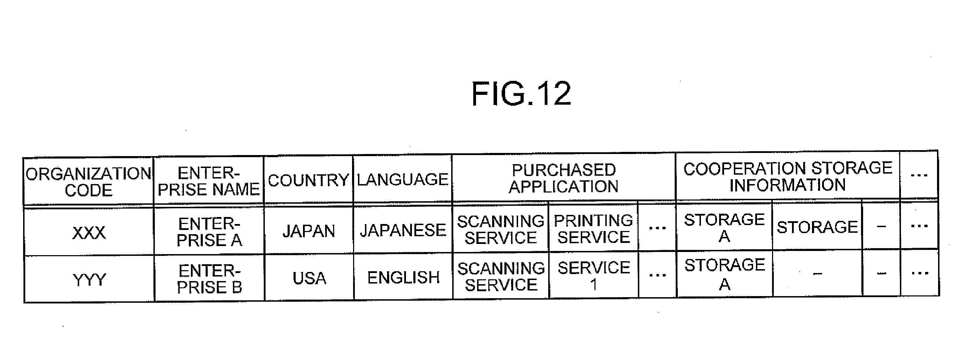

A control data 1230 includes an enterprise management information storage unit 1231, a user management information storage unit 1232, a device management information storage unit 1233, a data management information storage unit 1234, and a data storage 1235. Among them, the enterprise management information storage unit 1231 stores therein information of enterprises, organizations, belonging groups, and so on, to which the service providing system 1000 provides service. FIG. 12 is a diagram illustrating an example of information stored in the enterprise management information storage unit 1231. As illustrated in FIG. 12, the enterprise management information storage unit 1231 stores therein information of an organization code, an enterprise name, a country, a language, a purchased application, and a cooperation storage information. The organization code is information for specifying one or more users or a group of devices. The enterprise name is information indicating a name of an enterprise using service. The country is information indicating a country in which an enterprise is located. The language is information indicating a language corresponding to a country. The purchased application is information indicating an application purchased by an enterprise. The cooperation storage information is information indicating a storage available to the user using the service.

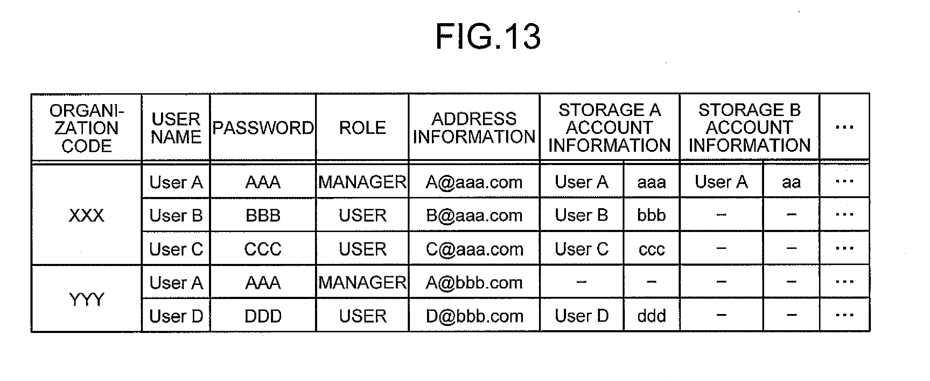

The user management information storage unit 1232 stores therein information of users using the service provided by the service providing system 1000. FIG. 13 is a diagram illustrating an example of information stored in the user management information storage unit 1232. As illustrated in FIG. 13, the user management information storage unit 1232 stores therein information of an organization code, a user name, a password, a role, address information, storage A account information, and storage B account information. The organization code is information for specifying a group such as an enterprise and an organization, as described above. The user name and the password are information for specifying the user using the service. The user name only needs to be information for specifying the user, and thus the identification information such as a user identification (ID) may be adopted alternatively. When, for example, a user ID can specify the user, a password is not necessary. Furthermore, it is possible to adopt information identifying an electronic medium, such as an integrated circuit (IC) card, a cellular phone, a tablet terminal, and an electronic book terminal (a serial ID of a device, a telephone number of a cellular phone, and profile information of a terminal, for example), that the user owns. Moreover, the user may be specified using combined information of a plurality of kinds of information specifying these electronic media. The address information is information indicating a mail address of each user. The storage A account information is information of an account allocated to each user regarding the "storage A". The storage B account information is information of an account allocated to each user regarding the "storage B".

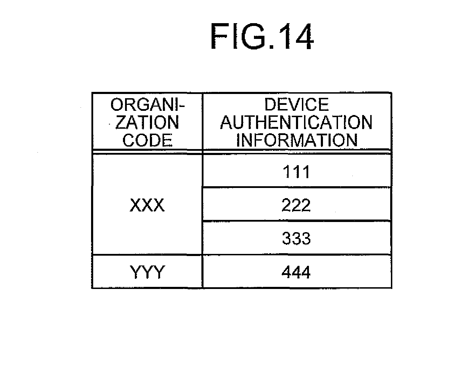

The device management information storage unit 1233 stores therein information related to authentication of devices arranged in each organization (each enterprise). FIG. 14 is a diagram illustrating an example of information stored in the device management information storage unit 1223. As illustrated in FIG. 14, the device management information storage unit 1223 stores therein information of an organization code and device authentication information. The organization code is information for specifying a group such as an enterprise and an organization, as described above. The device authentication information is information for authenticating a device, and is information, such as an ID and a device number, indicating that a given application is provided in a device.

The data management information storage unit 1234 stores therein information related to data stored in a data storage. The data storage 1235 stores therein data processed based on received data such as data received from devices and other data received from the outside, for example.

In the service adopting cloud computing, unspecified large number of organizations (enterprises) use various kinds of service. Thus, in the service adopting cloud computing, a used service, a candidate of a storage storing therein data, user information, device information, and so on, are managed in association with an organization code. The online storages are also available to unspecified large number of users. Thus, there exists login information (storage account information) corresponding to each of storages.

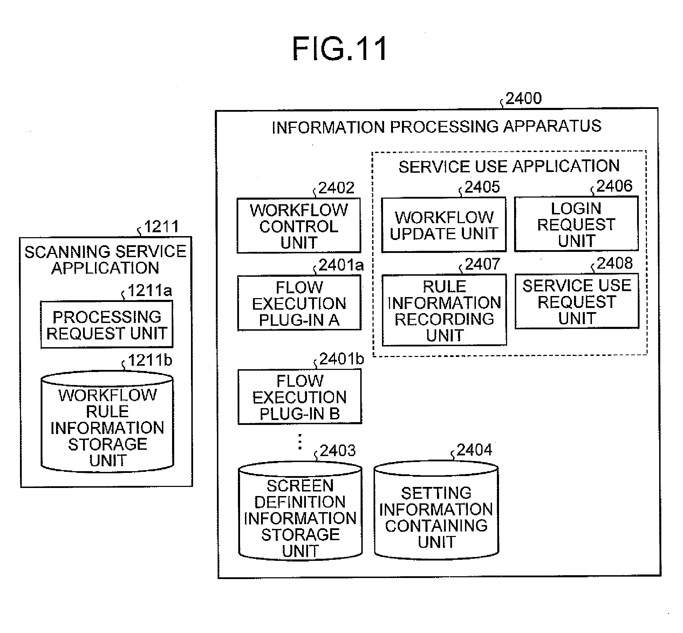

FIG. 11 is a block diagram illustrating a function configuration example of the scanning service application 1211 and the information processing device 2400 of the third embodiment. As illustrated in FIG. 11, the scanning service application 1211 functions as a processing request unit 1211 a and a workflow rule information 1211b.

The processing request unit 1211a requests processing by functions of units in a range open by the platform API. The workflow rule information 1211b corresponds to information of the workflow rules in the workflow rule storage unit 41.

The information processing device 2400 functions as a flow execution plug-in 2401a, a flow execution plug-in 2401b, a workflow control unit 2402, a screen definition information storage unit 2403, a setting information container unit 2404, a workflow update unit 2405, a login request unit 2406, a rule information recording unit 2407, and a service use request unit 2408.

The flow execution plug-in 2401a and the flow execution plug-in 2401b correspond to the flow execution plug-in 101a and the flow execution plug-in 101b. The workflow control unit 2402 corresponds to the workflow control unit 102. The screen definition information storage unit 2403 corresponds to the screen definition information storage unit 107. The setting information container unit 2404 contains setting information required for using the service providing system 1000. The workflow update unit 2405 corresponds to the workflow progress update unit 104. The login request unit 2406 requests login to the service providing system 1000. The rule information recording unit 2407 corresponds to the rule information recording unit 105. The service use request unit 2408 requests the use of various kinds of service provided by the service providing system 1000.

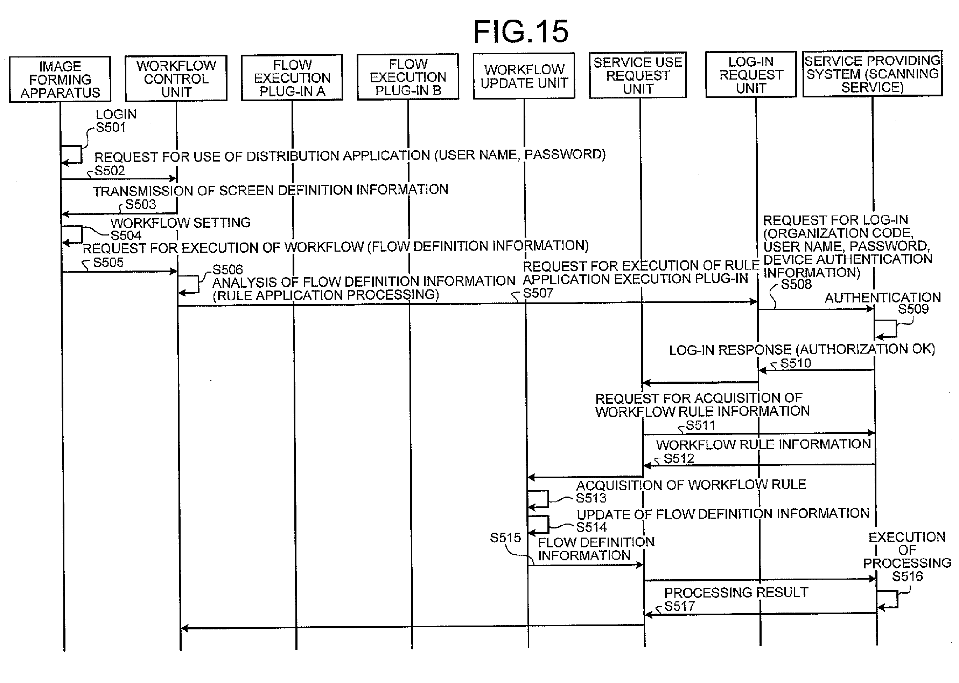

FIG. 15 is a sequence diagram illustrating an example of the entire processing of the third embodiment. FIG. 15 is an example of a case in which the image forming apparatus 2300 outputs a request for the execution of a workflow.

As illustrated in FIG. 15, a user performs login operation on the image forming apparatus 2300 (Step S501). The image forming apparatus 2300 transmits a request for the use of a distribution application to the workflow control unit 2402 (Step S502). When the workflow control unit 2402 has received the request for the use of the distribution application, it acquires screen definition information for setting a workflow from the screen definition information storage unit 2403 and makes a response to the image forming apparatus 2300 (Step S503). The image forming apparatus 2300 displays a screen for setting a workflow on the display unit based on the received screen definition information and receives workflow settings input by the user (Step S504). The image forming apparatus 2300 requests the execution of the workflow along the set workflow (S505). Here, the image forming apparatus 2300 also transmits flow definition information, user information such as a user name and a password, an organization code, and device authentication information, for example, together with the workflow execution request.

Receiving the workflow execution request from the image forming apparatus 2300, the workflow control unit 2402 analyzes flow definition information of the workflow for which execution has been requested (Step S506) and outputs a plug-in execution request to the login request unit 2406 (Step S507).

The login request unit 2406 requests login to the service providing system 1000 (Step S508). The information transmitted in the login request is an organization code, a user name, a password, device authentication information, and/or the like. That is, the information processing device 2400 transmits information necessary for using the service providing system 1000. The service providing system 1000 performs authentication processing based on the information transmitted by the login request unit 2406 (Step S509) and makes a response to the login request to the login request unit 2406 (Step S510). Thus, the login request unit 2406 notifies the service use request unit 2408 that the login authentication is completed normally.

When the login authentication is completed normally, the service use request unit 2408 requests the service providing system 1000 to acquire a workflow rule (Step S511). In response to this, the service providing system 1000 transmits a workflow rule to the service use request unit 2408 (Step S512). The service use request unit 2408 then outputs the workflow rule to the workflow update unit 2405.

The workflow update unit 2405 acquires the workflow rule output by the service use request unit 2408 (Step S513) and updates the flow definition information (Step S514). In the update of the flow definition information, the definition information of a flow in accordance with the processing specified by the parameter described in the acquired workflow rule is added to the flow definition information before update. The workflow update unit 2405 transmits the updated flow definition information to the service providing system 1000 through the service use request unit 2408 (Step S515). In this manner, the processing corresponding to the flow definition information is performed in the service providing system 1000 (Step S516), and the processing result is returned to the workflow control unit 2402 through the service use request unit 2408 (Step S517).

### (2) Computer program

As one form, a processing execution program executed in the information processing device 100 is recorded, as a file in an installable or executable format, in a computer readable recording medium such as a compact disc read only memory (CD-ROM), a flexible disk (FD), a compact disc recordable (CD-R), and a digital versatile disk (DVD), and then provided. Moreover, the processing execution program executed in the information processing device 100 may be stored in a computer connected to a network such as the Internet, and then provided by download thereof through the network. Alternatively, the processing execution program executed in the information processing device 100 may be provided or distributed through a network such as the Internet. Moreover, the processing execution program may be preliminarily embedded and provided in the ROM, for example.

The processing execution program executed in the information processing device 100 is of a module configuration including the units described above (workflow control unit 102, rule acquisition unit 103, workflow progress update unit 104). As actual hardware, a central processing unit (CPU) (processor) reads out the processing execution program from the recording medium and executes it, whereby the units described above are loaded on a main memory, and the workflow control unit 102, the rule acquisition unit 103, and the workflow progress update unit 104 are generated on the main memory.

The embodiment exerts the effect of decreasing a burden on an administrator.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

The present invention can be implemented in any convenient form, for example using dedicated hardware, or a mixture of dedicated hardware and software. The present invention may be implemented as computer software implemented by one or more network processing apparatus. The network can comprise any conventional terrestrial or wireless communications network, such as the Internet. The processing apparatus can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implemental on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cashe memory of the CPU, and the RAM may function as a physical memory or a primary memory of the apparatus, while the HDD may function as a secondary memory of the apparatus.

## Claims

1. An information processing device (100; 200; 2400), comprising:
a reception unit (102; 205; 2402) that receives a workflow definition specifying processing;
a rule acquisition unit (103; 204; 2408) that acquires, regarding the processing, a workflow rule capable of setting therein a parameter indicating which processing is to be executed;
a setting unit (104, 105; 205, 206; 2405, 2407) that sets the parameter of the workflow rule based on the workflow definition; and
an execution control unit (102; 205; 2402) that controls execution of the processing in accordance with the workflow rule in which the parameter is set.

2. The information processing device (100; 200; 2400) according to claim 1, wherein the execution control unit (102; 205; 2402) sequentially requests plug-ins (101a, 101b. 101; 201a, 201b, 201c; 2401a, 2401b) corresponding to the processing to execute processing.

3. The information processing device (100; 200; 2400) according to claim 1, further comprising:
a corresponding information acquisition unit (203) that acquires corresponding information when plug-ins (101a, 101b. 101; 201a, 201b, 201c; 2401a, 2401b) corresponding to the processing are described in the workflow rule, wherein
the execution control unit (102; 205; 2402) sequentially requests, based on the corresponding information, the plug-ins (101a, 101b. 101; 201 a, 201b, 201c; 2401a, 2401b) corresponding to the processing to execute processing.

4. A processing execution method, comprising:
receiving (S105; S305; S505) a workflow definition specifying processing;
acquiring (S108; S308; S512), regarding the processing, a workflow rule capable of setting therein a parameter indicating which processing is to be executed;
setting (S112; S310; S514) the parameter of the workflow rule based on the workflow definition; and
controlling (S115, S119; S313, S316) execution of the processing in accordance with the workflow rule in which the parameter is set.

5. The processing execution method according to claim 4, wherein the controlling (S 115, S119; S313, S316) includes sequentially requesting plug-ins (101a, 101b. 101; 201a, 201b, 201c; 2401a, 2401b) corresponding to the processing to execute processing.

6. The processing execution method according to claim 4, further comprising:
acquiring (S310) corresponding information when plug-ins (101a, 101b. 101; 201a, 201b, 201c; 2401a, 2401b) corresponding to the processing are described in the workflow rule, wherein
the controlling (S313, S316) includes sequentially requesting, based on the corresponding information, the plug-ins (101a, 101b. 101; 201a, 201b, 201c; 2401a, 2401b) corresponding to the processing to perform processing.

7. A computer program product comprising a non-transitory computer-usable medium having computer-readable program codes embodied in the medium, wherein the program codes when executed cause a computer to execute:
receiving (S105; S305; S505) a workflow definition specifying processing;
acquiring (S108; S308; S512), regarding the processing, a workflow rule capable of setting therein a parameter indicating which processing is to be executed;
setting (S112; S310; S514) the parameter of the workflow rule based on the workflow definition; and
controlling (S 115, S119; S313, S316) execution of the processing in accordance with the workflow rule in which the parameter is set.

8. The computer program product according to claim 7, wherein the controlling (S115, S119; S313, S316) includes sequentially requesting plug-ins (101a, 101b. 101; 201a, 201b, 201 c; 2401 a, 2401b) corresponding to the processing to execute processing.

9. The computer program product according to claim 7, wherein the program codes when executed cause the computer to further execute:
acquiring (S310) corresponding information when plug-ins (101 a, 101b. 101; 201a, 201b, 201c; 2401a, 2401b) corresponding to the processing are described in the workflow rule, wherein
the controlling (S313, S316) includes sequentially requesting, based on the corresponding information, the plug-ins (101a, 101b. 101; 201a, 201b, 201c; 2401a, 2401b) corresponding to the processing to perform processing.
